# EUROPÄISCHE PATENTSCHRIFT

(11) **EP 0 766 796 B1**
(45) Veröffentlichungstag und Bekanntmachung des Hinweises auf die Patenterteilung: **28.01.1998**
(21) Anmeldenummer: 95919274.1
(22) Anmeldetag: 26.05.1995
(51) Int. Cl.: F16D 25/12, F16D 25/08

(54) **SCHALTKUPPLUNG**
CLUTCH
EMBRAYAGE

(30) Priorität: 15.06.1994 AT 1185/94
(43) Veröffentlichungstag der Anmeldung: 09.04.1997
(73) Patentinhaber: LEOPOLD, Horst, A-4040 Linz (AT)
(72) Erfinder: LEOPOLD, Horst, A-4040 Linz (AT)
(74) Vertreter: Hübscher, Heiner, Dipl.-Ing.
(86) Internationale Anmeldenummer: AT9500103
(87) Internationale Veröffentlichungsnummer: WO9534767

(56) Entgegenhaltungen:
- EP-A- 0 119 137
- DE-A- 3 732 799
- FR-A- 1 341 037

## Beschreibung

Die Erfindung bezieht sich auf eine Schaltkupplung mit zwei zwischen sich eine keilförmige Ringnut bildenden, drehfest auf einer Welle sitzenden Scheiben, von denen eine mittels eines vorzugsweise hydraulischen Schalttriebes axial verstellbar ist, und mit in die Ringnut zwischen den Scheiben eingesetzten, von einer Ringfeder umschlossenen, keilförmigen Kupplungssegmenten, die mit einer sie umschließenden, gegenüber der Welle frei drehbar gelagerten Trommel radial zusammenwirken.

Durch die axiale Verstellung einer der beiden Scheiben mittels des hierfür vorgesehenen Schalttriebes wird bei Schaltkupplungen dieser Art die Weite der sich zwischen den Scheiben ergebenden Ringnut verringert, so daß die in diese Ringnut eingesetzten, keilförmigen Kupplungssegmente zur Drehmomentübertragung von der Welle auf die Trommel entlang der kegelförmigen Nufflanken radial nach außen kraftschlüssig gegen die Trommel gedrückt werden. Die zusammenwirkenden Kupplungsteile werden dabei nicht nur mechanisch, sondern auch thermisch beansprucht, was aufgrund der begrenzten thermischen Belastbarkeit insbesondere der Kupplungssegmente zu einer Leistungsbeschränkung führt, die durch eine entsprechend größere Baugröße der Schaltkupplung überwunden werden kann. Der Einsatz größerer Baugrößen ist aber im allgemeinen wegen des damit verbundenen höheren Gewichtes und größeren Platzbedarfes unerwünscht.

Der Erfindung liegt somit die Aufgabe zugrunde, eine Schaltkupplung der eingangs geschilderten Art mit einfachen konstruktiven Mitteln so zu verbessern, daß gegenüber herkömmlichen Schaltkupplungen eine höhere Leistung übertragen werden kann, ohne auf eine größere Baugröße ausweichen zu müssen.

Die Erfindung löst die gestellte Aufgabe dadurch, zumindest eine der beiden Scheiben Lüfterflügel zum Ansaugen einer Kühlluftströmung für die Kupplungssegmente durch stirnseitige Ansaugöffnungen in der Trommel aufweist.

Mit Hilfe der angesaugte Kühlluft kann zusätzlich Wärme von den thermisch hoch belasteten Kupplungsteilen, insbesondere von den Kupplungssegmenten, abgeführt werden, die demzufolge höher belastbar sind, so daß durch die erfindungsgemäße Maßnahme eine Steigerung der mit der Schaltkupplung einer Baugröße übertragbaren Leistung möglich wird. Der hierfür erforderliche bauliche Mehraufwand ist gering, weil lediglich eine der beiden Scheiben mit geeigneten Lüfterflügeln ausgerüstet und für eine ausreichende Luftansaugung durch Trommelöffnungen gesorgt werden muß.

Besonders vorteilhafte Konstruktionsverhältnisse ergeben sich in diesem Zusammenhang, wenn die Lüfterflügel an der Außenseite der der Stirnwand der Trommel benachbarten Scheibe angeordnet sind. Diese Lüfterflügelanordnung stellt nämlich eine günstige Kühlluftströmung innerhalb der Trommel zwischen den in Umfangsrichtung aneinandergereihten Kupplungssegmenten in axialer Richtung sicher, wobei sich der zusätzliche Vorteil ergibt, daß auch der in axialer Richtung an die verstellbare Scheibe anschließende Schalttrieb gekühlt werden kann, was im Falle eines hydraulischen Schalttriebes eine vorteilhafte Verlängerung der Standzeiten für die Dichtungen mit sich bringt.

Die Lüfterflügel können unterschiedlich ausgebildet sein und den jeweiligen Konstruktionsbedingungen angepaßt werden. Besonders einfache Verhältnisse ergeben sich dabei, wenn die Lüfterflügel durch über den Umfang verteilte, radiale Schlitze in einem axial vorragenden Ringansatz der Scheibe bestehen. Die Kühlluft wird über die durch die radialen Schlitze gebildeten Lüfterflügel radial nach außen gefördert und an der Umfangswand der Trommel axial umgelenkt, um durch die sich zwischen benachbarten Kupplungssegmenten ergebenden Spalte zu strömen, wobei von den Kupplungssegmenten Wärme aufgenommen und ausgetragen wird, vorzugsweise durch den sich zwischen der Trommel und dem feststehenden Kupplungsgehäuse bildenden Ringspalt.

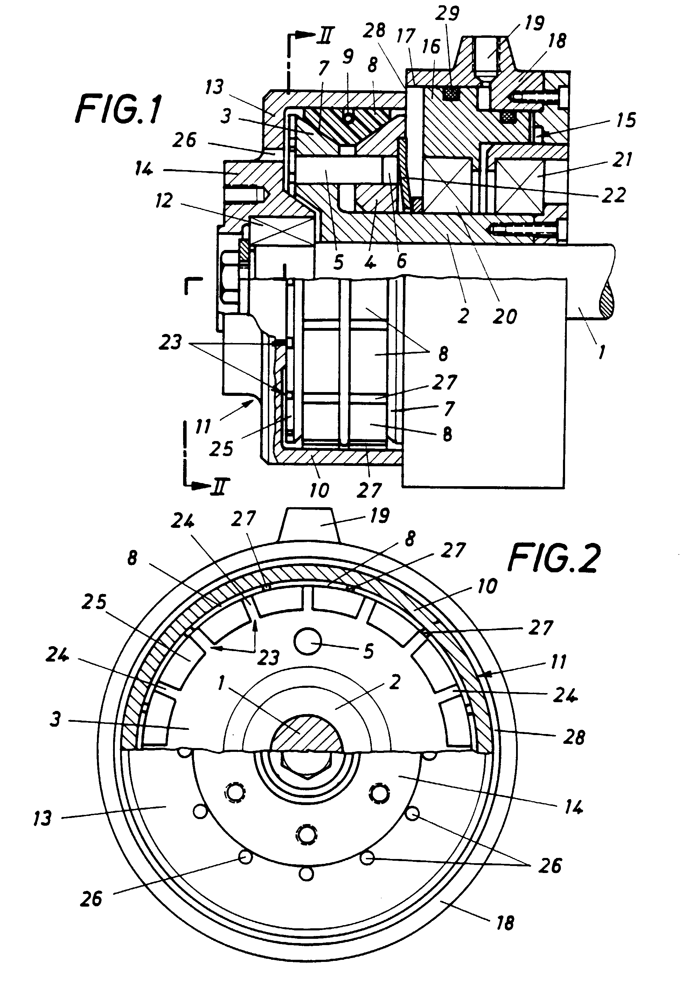

In der Zeichnung ist der Erfindungsgegenstand beispielsweise dargestellt. Es zeigen
- Fig. 1: eine erfindungsgemäße Schaltkupplung in einer teilweise geschnittenen Seitenansicht und
- Fig. 2: einen Schnitt nach der Linie II-II der Fig. 1.

Die Schaltkupplung gemäß dem dargestellten Ausführungsbeispiel weist eine antreibbare Welle 1 auf, auf der die Nabe 2 einer Scheibe 3 dreh- und verschiebefest sitzt. Auf der Nabe 2 ist eine weitere Scheibe 4 axial verschiebbar, aber drehfest gelagert. Zu diesem Zweck trägt die Scheibe 3 axiale Führungsbolzen 5, die in als Gleitführungen dienende Bohrungen 6 der Scheibe 4 eingreifen. Zwischen den beiden Scheiben 3 und 4 ergibt sich eine keilförmige Ringnut mit kegelförmigen Nutflanken 7 zur Aufnahme keilförmiger Kupplungssegmente 8, die mit Abstand voneinander über den Umfang verteilt angeordnet sind und von einer Ringfeder 9 umschlossen werden. Diese Kupplungssegmente 8 wirken mit dem Mantel 10 einer sie umschließenden Trommel 11 zusammen, die über ein Wälzlager 12 auf der Welle 1 frei drehbar gelagert ist und im Bereich ihrer Stirnwand 13 einen Anschlußflansch 14 für einen über die Schaltkupplung anzutreibenden Konstruktionsteil bildet.

Zum Schalten der Kupplung dient ein Schalttrieb 15, der nach dem Ausführungsbeispiel aus einem Ringkolben 16 besteht, der in eine Zylinderbohrung 17 im feststehenden Gehäuse 18 der Schaltkupplung eingesetzt ist und über den Hydraulikanschluß 19 mit einem hydraulischen Druckmittel beaufschlagt werden kann. Die Anordnung ist dabei so getroffen, daß die Welle 1 über Wälzlager 20 und 21 im Ringkolben 16 und im Gehäuse 18 drehbar gehalten wird. Wird der Ringkolben 16 über den Hydraulikanschluß 19 beaufschlagt, so wird die Scheibe 4 über eine Tellerfeder 22 axial verlagert, wobei aufgrund der Abstandsverkürzung der beiden Scheiben 3 und 4 die Kupplungssegmente 8 entlang der kegelförmigen Nufflanken 7 radial nach außen kraftschlüssig an den Mantel 10 der Trommel 11 angedrückt werden und eine Drehmitnahme der Trommel 11 bewirken. Bei einer Entlastung des Ringkolbens 16 kann die Scheibe 4 wieder axial ausweichen, wobei die Ringfeder 9 ein radiales Rückstellen der Kupplungssegmente 8 bewirkt.

Um eine thermische Entlastung vor allem der Kupplungssegmente 8 sicherzustellen, ist die Scheibe 3 auf der der Stirnwand 13 der Trommel 11 zugekehrten Seite mit Lüfterflügeln 23 versehen, die sich durch radiale Schlitze 24 in einem axial vorragenden Ringansatz 25 ergeben. Da die Stirnwand 13 der Trommel 11 mit Ansaugöffnungen 26 ausgestattet ist, wird über diese Ansaugöffnungen 26 Kühlluft in das Innere der Trommel 11 angesaugt und im Freiraum zwischen der Stirnwand 13 und der Scheibe 3 radial nach außen gegen den Mantel 10 der Trommel 11 gefördert, wo die Kühlluftströmung axial umgelenkt und durch die Spalte 27 zwischen den Kupplungssegmenten 8 hindurch auf die andere Stirnseite der Trommel 11 geführt wird. Die erwärmte Kühlluft kann dann durch den Ringspalt 28 zwischen dem Gehäuse 18 und der Trommel 11 wieder aus der Schaltkupplung austreten. Diese Kühlluftströmung bedingt nicht nur eine Wärmeabfuhr aus dem Bereich der Kupplungssegmente 8, sondern auch aus dem Bereich des Ringkolbens 16, was die thermische Belastung der Kolbendichtung 29 herabsetzt und damit die Standzeit dieser Dichtung verlängert.

## Patentansprüche

1. Schaltkupplung mit zwei zwischen sich eine keilförmige Ringnut bildenden, drehfest auf einer Welle (1) sitzenden Scheiben (3,4), von denen eine (4) mittels eines vorzugsweise hydraulischen Schalttriebes (15) axial verstellbar ist, und mit in die Ringnut zwischen den Scheiben eingesetzten, von einer Ringfeder (9) umschlossenen, keilförmigen Kupplungssegmente (8), die mit einer sie umschließenden, gegenüber der Welle (1) frei drehbar gelagerten Trommel (11) radial zusammenwirken, dadurch gekennzeichnet, daß zumindest eine der beiden Scheiben (3, 4) Lüfterflügel (23) zum Ansaugen einer Kühlluftströmung für die Kupplungssegmente (8) durch stirnseitige Ansaugöffnungen (26) in der Trommel (11) aufweist.

2. Schaltkupplung nach Anspruch 1, dadurch gekennzeichnet, daß die Lüfterflügel (23) an der Außenseite der der Stirnwand (13) der Trommel (11) benachbarten Scheibe (3) angeordnet sind.

3. Schaltkupplung nach Anspruch 1 oder 2, dadurch gekennzeichnet, daß die Lüfterflügel (23) durch über den Umfang verteilte, radiale Schlitze (24) in einem axial vorragenden Ringansatz (25) der Scheibe (3) bestehen.

## Claims

1. A clutch coupling comprising two discs (3, 4) forming a wedge-shaped annular groove between them and mounted non-rotatably on a shaft (1), one disc (4) being axially adjustable by a preferably hydraulic drive, and comprising wedge-shaped clutch segments (8) inserted into the annular groove between the discs and surrounded by an annular spring (9) and co-operating radially with a drum (2) which surrounds them and is mounted so as to be freely rotatable relative to the shaft (1), characterised in that at least one of the two discs (3, 4) has fan blades (23) for sucking a stream of air for cooling the clutch segments (8) through suction openings (26) in one or both ends of the drum (11).

2. A clutch coupling according to claim 1,
characterised in that the fan blades (23) are disposed on the outside of the disc (3) adjoining the end wall (13) of the drum (11).

3. A clutch coupling according to claim 1 or 2,
characterised in that the fan blades (23) comprise radial slots (24) distributed around the periphery in an axially projecting annular attachment (25) to the disc (3).

## Revendications

1. Embrayage, avec deux disques (3, 4) constituant entre eux une gorge annulaire en forme de coin, siégeant, assujettis à rotation, sur un arbre (1), disques dont l'un (4) est réglable axialement au moyen d'un mécanisme de manoeuvre (15) de préférence hydraulique, et avec des éléments d'accouplement (8) en forme de coin, insérés dans la gorge annulaire entre les disques, entourés par un ressort annulaire (9), segments d'accouplement coopérant radialement avec un tambour (11) monté à rotation libre par rapport à l'arbre et entourant les segments d'accouplement, caractérisé en ce qu'au moins l'un des deux disques (3, 4) présente des ailettes de ventilation (23) destinées à aspirer un courant d'air de refroidissement prévu pour les segments d'accouplement (8), à travers des ouvertures d'aspiration (26) frontales ménagées dans le tambour (11).

2. Embrayage selon la revendication 1, caractérisé en ce que les ailettes de ventilation (23) sont disposées sur la face extérieure du disque (3) voisin de la paroi frontale (13) du tambour (11).

3. Embrayage selon la revendication 1 ou 2, caractérisé en ce que les ailettes de ventilation (23) sont constituées par des fentes radiales (24), réparties sur la périphérie, ménagées dans un appendice annulaire (25), faisant saillie axialement, du disque (3).
